# EUROPEAN PATENT APPLICATION

(11) **EP 2 385 361 A2**
(43) Date of publication of application: **09.11.2011**
(21) Application number: 11250478.2
(22) Date of filing: 15.04.2011
(51) Int. Cl.: G01N 15/06

(54) **Particulate matter detecting device**

(30) Priority: 16.04.2010 JP 2010095226
(71) Applicant: NGK Insulators, Ltd., Nagoya-City, Aichi Pref. 467-8530 (JP)
(72) Inventor: Tokuda, Masahiro, Nagoya City, Aichi-ken 467-8530 (JP); Egami, Takashi, Nagoya City, Aichi-ken 467-8530 (JP); Sakuma, Takeshi, Nagoya City, Aichi-ken 467-8530 (JP); Nishikawa, Satoshi, Nagoya City, Aichi-ken 467-8530 (JP); Kondo, Atsuo, Nagoya City, Aichi-ken 467-8530 (JP)
(74) Representative: Paget, Hugh Charles Edward

(57) **Abstract**

A particulate matter detecting device 100 according to the present invention includes a sensor element 10 having a measurement electrode 12 and a heater electrode provided on one end portion side of a plate-like element substrate, a cylindrical lead terminal cover member 30 having the sensor element 10 inserted into a penetration portion 31 that penetrates in an axial direction thereof so that the sensor element 10 is held inside a detecting device external cylinder 20, and the detecting device external cylinder 20. The penetration portion 31 includes a first penetration portion 31a having a size corresponding to that of a cross section of the sensor element 10, and a second penetration portion 31b with a larger cross section perpendicular to the penetration direction than that of the first penetration portion 31a. An electrical insulating sealant 32 is filled in a gap between the second penetration portion 31b and the sensor element 10 inserted into the second penetration portion 31b so that the sensor element 10 and the lead terminal cover member 30 are fixed.

## Description

### Field of the Invention

The present invention relates to a particulate matter detecting device. More particularly, the present invention relates to a particulate matter detecting device which is extremely small-sized and can be manufactured inexpensively.

### Related Background of the Invention

Flue gas and diesel engine exhaust gas contain particulate matter (PM) such as soot, which causes air pollution. In order to remove them, a filter made of ceramic and the like (diesel particulate filter: DPF) has been widely used. The DPF made of ceramic can be used for a long period, but defects such as a crack or melting can occur due to thermal deterioration or the like, and it is likely that particulate matter leak, even though in a small amount. In the case of occurrence of such a defect, it is extremely important to immediately detect the occurrence of the defect and to recognize abnormality of a device from the viewpoint of air-pollution prevention.

As a method of detecting occurrence of such a defect, a method is known that a particulate matter detecting device is provided on the downstream side of the DPF (See Patent Document 1, for example).

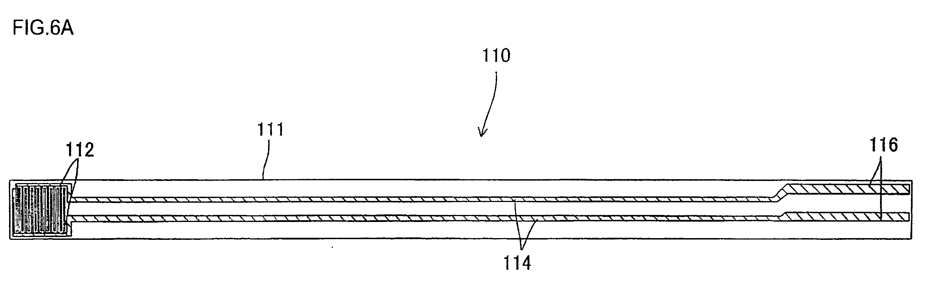

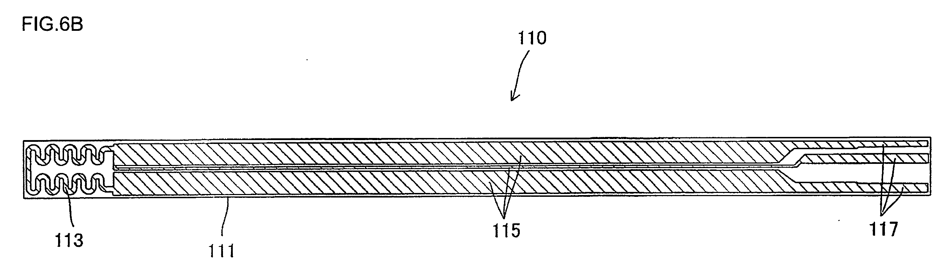

As such a particulate matter detecting device, a particulate matter detecting device provided with a sensor element 110 in which a pair of measurement electrodes 112 are arranged at one of ends as shown in Figs. 6A and 6B is proposed, and the sensor element 110 in which the measurement electrodes 112 are arranged has a plate-shaped element substrate 111, which is elongated in one direction, so that the particulate matter in an exhaust gas can be efficiently sampled and also heat from the exhaust gas or the like does not transfer to the entire device when the sensor element is inserted into a through channel through which the exhaust gas passes.

The plate-shaped element substrate 111, which is elongated in one direction, as above, has a pair of the measurement electrodes 112 at one of the ends and lead terminal 116 is arranged at the other end portion, and further, on the element substrate 111, wiring 114 for connecting (electrically connecting) the measurement electrodes 112 on one end portion and the lead terminal 116 on the other end portion is arranged.

Also, this sensor element 110 is to measure particulate matter in an exhaust gas by making the particulate matter adhere to the measurement electrodes 112 of the sensor element 110 and by measuring electric characteristics between a pair of the measurement electrodes 112, but since the particulate matter adhering to the measurement electrodes 112 need to be burned and removed regularly, a heater electrode 113 for burning and removing the particulate matter adhering to the measurement electrodes 112 is disposed on the one end side of the element substrate 111, for example. As for this heater electrode 113, too, a lead terminal 117 is arranged on the other end portion similarly to the measurement electrodes 112, and further, on the element substrate 111, wiring 115 for connecting the heater electrode 113 and the lead terminal 117 on the other end portion is arranged.

The sensor element having the plate-shaped element substrate, which is elongated in one direction, as above, that is, a plate-shaped sensor element elongated in one direction is arranged inside a cylindrical outer sheath body and is fixed by filling a gap inside the outer sheath body with a powder such as insulator, talc and the like in a compressed state. As the sensor element is provided inside the cylindrical outer sheath body through the aforementioned method, it is required to have a predetermined or longer length.

[Patent Document 1] JP 2007-519899 A

### SUMMARY OF THE INVENTION

### Problem to be Solved by the Invention

Since this type of a particulate matter detecting device performs measurement in a state with one end portion of the sensor element exposed to an exhaust gas, a pair of the measurement electrodes, the heater electrode, and the wirings connected to the respective electrodes are formed by a metal material excellent in heat resistance and corrosion resistance. And as the metal material excellent in heat resistance and corrosion resistance, precious metal such as expensive platinum or the like has been mainly used.

As the sensor element is fixed inside the cylindrical outer sheath body with such powder material as talc in compression, it has to have the predetermined or longer length so that the heat on one end portion side is not excessively transferred to the other end portion, and it is stably fixed inside the outer sheath body. A significantly large amount of platinum is used for forming the wiring that is provided to extend from one end portion to the other end portion, thus increasing manufacturing costs. In order to decrease the resistance value of the wiring connected to the heater electrode to be smaller than that of the heater electrode, the thickness of the wiring has to be increased. This may further increase consumption of platinum. For example, if thickness of the wiring connected to the heater electrode is decreased, the resistance value of the wiring becomes large. As a result, heat is generated not only in the portion where the heater electrodes are provided, but also in the wiring portion, thus entirely heating the sensor element.

Also, the sensor element has a problem that the sensor element is easily broken by vibration of an automobile or the like or collision of solid foreign substances (incoming substances) outside the device or flying on a flow of an exhaust gas and the like. Also, a particulate matter detecting device provided with such a plate-shaped sensor element elongated in one direction has a problem that the device is not easy to be fixed to an exhaust system of an automobile in a stable state.

The present invention was made in view of the above-described problems and provides a particulate matter detecting device which is extremely small-sized and can be manufactured inexpensively.

### Means for Solving the Problem

In order to achieve the above-described object, the present invention provides a particulate matter detecting device as follows.

[1] A particulate matter detecting device comprising: a sensor element having a unidirectionally long flat-plate-shaped element substrate, at least one pair of measurement electrodes arranged on one end portion side of the element substrate, a heater electrode arranged on the one end portion of the element substrate, a measurement electrode lead terminal arranged on the other end portion of the element substrate, a heater electrode lead terminal arranged on the other end portion of the element substrate, a measurement electrode wiring for electrically connecting the measurement electrodes and the measurement electrode lead terminal, and a heater electrode wiring for electrically connecting the heater electrode and the heater electrode lead terminal; a hollow columnar lead terminal cover member which is formed of ceramics with electrical insulation property, and in which a penetration portion that penetrates from one end face to the other end face is formed and the sensor element is inserted into the penetration portion so that the measurement electrode lead terminal and the heater electrode lead terminal of the sensor element are at least partially arranged inside the penetration portion; and a detecting device external cylinder that is formed of a metal material for storing the lead terminal cover member having the sensor element inserted into the penetration portion in a state that the one end portion of the sensor element is exposed outside from one end face of the external cylinder, wherein: the penetration portion formed in the lead terminal cover member includes a first penetration portion in which a size of a cross section perpendicular to a penetration direction corresponding to a size of a cross section of the sensor element perpendicular to a longitudinal direction in a range with a predetermined length from the one end face of the lead terminal cover member, and a second penetration portion which penetrates from the first penetration portion to the other end face of the lead terminal cover member and which is formed so that a size of a cross section perpendicular to the penetrating direction is larger than that of the first penetration portion; and an electrical insulating sealant is filled in a gap between the second penetration portion and the sensor element inserted into the second penetration portion so that the sensor element and the lead terminal cover member are fixed.

[2] In the particulate matter detecting device according to [1], a lead wiring for electrically connecting the measurement electrode lead terminal and the heater electrode lead terminal is provided in a gap between the second penetration portion and the sensor element inserted into the second penetration portion.

[3] In the particulate matter detecting device according to [2], the measurement electrode lead terminal and the heater electrode lead terminal are joined to the respective lead wirings by welding.

[4] In the particulate matter detecting device according to [2] or [3], the measurement electrode lead terminal and the heater electrode lead terminal, and the respective corresponding lead wirings are fixed by said sealant.

[5] In the particulate matter according to any one of [1] to [4], the measurement electrode wiring and the heater electrode wiring are partially provided inside the second penetration portion of the lead terminal cover member so as to be coated with the sealant.

[6] In the particulate matter detecting device according to any one of [1] to [5], the sealant is at least one selected from a group consisting of an inorganic adhesive, a glass material, and a heat-resistant resin.

[7] In the particulate matter detecting device according to any one of [1] to [6], a length of the second penetration portion formed in the lead terminal cover member in a penetration direction is 0.05 to 0.5 times longer than that of the sensor element.

[8] The particulate matter detecting device according to any one of [1] to [7] further includes a cylindrically-formed rear external cylinder with a fitting portion that is allowed to be fitted with the other end portion side of the detecting device external cylinder. The other end portion of the detecting device external cylinder is fitted with the fitting portion of the rear external cylinder so that the lead terminal cover member is stored inside the detecting device external cylinder while being pressed against the one end portion side of the detecting device external cylinder.

[9] The particulate matter detecting device according to any one of [1] to [8] further includes a rear external cylinder allowed to be fitted with the other end portion of the detecting device external cylinder, wherein the rear external cylinder is fitted with the other end portion side of the detecting device external cylinder so that a fitted portion between the detecting device external cylinder and the rear external cylinder is joined by welding.

[10] In the particulate matter detecting device according to any one of [1] to [9], an electrical insulating insulator is further provided inside the detecting device external cylinder at the one end portion side of the detecting device external cylinder, and an electrical insulating inorganic powder is filled between the insulator and the lead terminal cover member; and the one end portion of the sensor element that has penetrated through the penetration portion of the lead terminal cover member penetrates through the inorganic powder and the insulator that have been filled, and is exposed from the one end face of the detecting device external cylinder.

[11] In the particulate matter detecting device according to any one of [1] to [10], an electrical insulating inorganic powder is filled in a gap between the second penetration portion and the sensor element inserted into the second penetration portion on the one end portion side of the lead terminal cover member, and the sealant is filled on the other end portion side of the lead terminal cover member.

### Effect of the Invention

In the particulate matter detecting device according to the present invention, an electrical insulating sealant is filled in a gap between the second penetration portion and the sensor element inserted therein. The sensor element and the lead terminal cover member are fixed. This makes it possible to store the sensor element inside the external cylinder of the detecting device in a stable state. The sensor element may have shorter length in a longitudinal direction compared with the generally employed sensor element. The particulate matter detecting device may be easily installed (fixed) in the exhaust system. The sensor element may be protected from damage caused by impingement of the fragment, and impact owing to vibration and falling. As the length of the sensor element is reduced, the length of the wiring for electrically connecting the respective electrodes (measurement electrodes and heater electrode) may also be reduced, thus markedly reducing consumption of the costly noble metal such as platinum, and accordingly, markedly reducing the material cost of the particulate matter detecting device. This makes it possible to provide the compact particulate matter detecting device.

As described above, the other end of the sensor element is fixed to the lead terminal cover member with the electrical insulating sealant. This makes it possible to effectively prevent separation of the lead terminals for measurement electrodes and the heater electrodes from the element substrate.

The particulate matter detecting device according to the present invention employs the above-structured sensor element and the lead terminal cover member to reduce the length of the sensor element to be shorter than the generally employed element. This may realize the compact particulate matter detecting device.

### BRIEF DESCRIPTION OF THE DRAWINGS

Fig. 1A is a perspective view schematically illustrating an embodiment of a particulate matter detecting device of the present invention.
Fig. 1B is a front view schematically illustrating the embodiment of the particulate matter detecting device of the present invention.
Fig. 1C is a side view schematically illustrating the embodiment of the particulate matter detecting device of the present invention.
Fig. 1D is a schematic diagram illustrating an A-A' section in Fig. 1B.
Fig. 2A is a plan view schematically illustrating an upper face of a sensor element used in the embodiment of the particulate matter detecting device of the present invention.
Fig. 2B is a plan view schematically illustrating a side face of a sensor element used in the embodiment of the particulate matter detecting device of the present invention.
Fig. 2C is a plan view schematically illustrating a lower face of the sensor element used in the embodiment of the particulate matter detecting device of the present invention.
Fig. 2D is a schematic diagram illustrating a B-B' section in Fig. 2B.
Fig. 3 is a schematic view illustrating a cross section of a particulate matter detecting device according to another embodiment of the present invention.
Fig. 4 is a schematic view illustrating a cross section of a particulate matter detecting device according to another embodiment of the present invention.
Fig. 5 is a schematic view illustrating a cross section of a particulate matter detecting device according to another embodiment of the present invention.
Fig. 6A is a plan view schematically showing an upper face of a sensor element of the generally employed particulate matter detecting device.
Fig. 6B is a plan view schematically showing a lower face of a sensor element of the generally employed particulate matter detecting device.

### DESCRIPTION OF THE PREFERRED EMBODIMENTS

An embodiment of the present invention will be described below in more detail, but the present invention is not limited by the following embodiment but it should be understood that appropriate design changes, improvements and the like can be made on the basis of a usual knowledge of those skilled in the art within the scope not departing from the gist of the present invention.

### [1] Particulate matter detecting device:

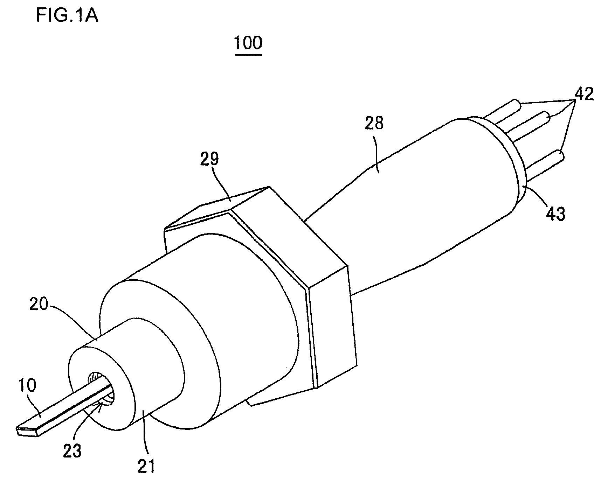

Referring to Figs. 1A to 1D, a particulate matter detecting device according to an embodiment of the present invention is formed as a particulate matter detecting device 100 that includes a sensor element 10, a hollow columnar lead terminal cover member 30 that has the sensor element 10 inserted into a penetration portion 31 that penetrates in an axial direction, and a detecting device external cylinder 20 for storing the lead terminal cover member 30 having the sensor element 10 inserted into the penetration portion 31.

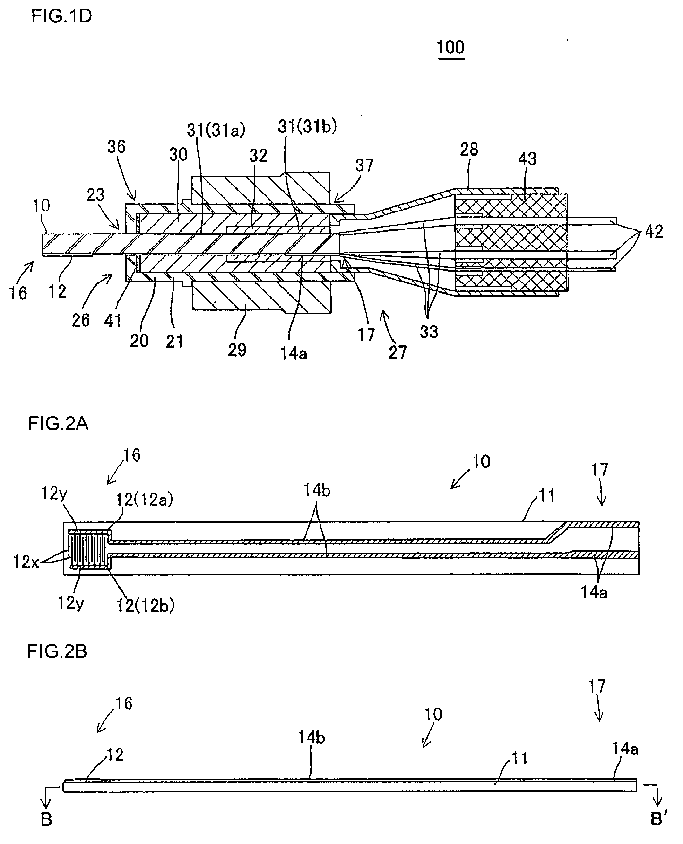

Referring to Figs. 2A to 2D, the sensor element 10 includes a unidirectionally long flat-plate-like element substrate 11, at least a pair of measurement electrodes 12 provided at one end portion 16 of the element substrate 11 (in Fig. 2A, a pair of measurement electrodes 12a, 12b provided at one end portion 16 of the element substrate 11 on the upper face), a heater electrode 13 provided at one end portion 16 of the element substrate 11, a measurement electrode lead terminal 14a provided at the other end portion 17 of the element substrate 11, a heater electrode lead terminal 15a provided at the other end portion 17 of the element substrate 11, a measurement electrode wiring 14b for electrically connecting the pair of measurement electrodes 12 and the measurement electrode lead terminal 14a, and a heater electrode wiring 15b for electrically connecting the heater electrode 13 and the heater electrode lead terminal 15a.

In the particulate matter detecting device 100 according to the embodiment, the heater electrode 13 and the heater electrode wiring 15b are provided inside the element substrate 11 so as not to be in direct contact with the exhaust gas. Unlike the generally employed sensor element of the particulate matter detecting device, the costly noble metal such as platinum does not have to be used as the material for forming the heater electrode 13 and the heater electrode wiring 15b. This makes it possible to largely reduce the material cost of the particulate matter detecting device 100.

The particulate matter detecting device 100 according to the embodiment includes a hollow columnar lead terminal cover member 30 that allows the sensor element 10 to be inserted into the penetration portion 31 that penetrates in the axial direction for holding the sensor element 10 inside the detecting device external cylinder 20. Specifically, the lead terminal cover member 30 formed of ceramic material with electrical insulating property includes the penetration portion 31 that penetrates from one end face 36 to the other end face 37. The sensor element 10 is inserted into the penetration portion 31 so that the measurement electrode lead terminal 14a and the heater electrode lead terminal 15a (see Figs. 2A to 2D) of the sensor element 10 are at least partially disposed inside the penetration portion 31.

The penetration portion 31 formed in the lead terminal cover member 30 includes a first penetration portion 31a that has a size of a cross section perpendicular to the penetration direction corresponding to a size of a cross section of the sensor element 10 perpendicular to the longitudinal direction in a range with the predetermined length from one end face 36 of the lead terminal cover member 31, and a second penetration portion 31b that penetrates from the first penetration portion 31a to the other end face 37 of the lead terminal cover member 30, and has a size of a cross section perpendicular to the penetration direction larger than that of the first penetration portion 31a. An electrical insulating sealant 32 is filled in the gap between the second penetration portion 31b and the sensor element 10 inserted therein so that the sensor element 10 and the lead terminal cover member 30 are fixed.

The aforementioned structure allows the sensor element 10 to be stably stored inside the detecting device external cylinder 20. This allows easy installation (fixation) of the particulate matter detecting device 100 into the exhaust system, and ensures the sensor element 10 to be less susceptible to damage caused by impingement of fragment and impact resulting from vibration and falling.

The aforementioned structure may reduce its longitudinal length to be shorter than that of the generally employed sensor element. That is, the sensor element of the generally employed particulate matter detecting device is fixed inside the outer sheath body ("detecting device external cylinder" in the invention) using talc powder in compression. Such structure is required to have a predetermined or longer length so that heat on one end portion side is not excessively transferred to the other end portion, and stable fixation inside the outer sheath body is ensured. On the contrary, the particulate matter detecting device 100 according to the embodiment includes the lead terminal cover member 30 that allows the sensor element 10 to penetrate through the inner penetration portion 31 so as to be held therein. The gap between the penetration portion (specifically, the second penetration portion 31b) and the sensor element 10 is filled with the electrical insulating sealant 32 so that the sensor element 10 is fixed to the lead terminal cover member 30. Unlike the generally employed sensor element, the longitudinal length of the sensor element may be reduced, which makes it possible to reduce the length of the wiring (measurement electrode wiring 14b, heater electrode wiring 15b) for electrical connection between the respective electrodes (measurement electrode and heater electrode). As a result, consumption of costly noble metal such as platinum may be markedly reduced, thus largely decreasing the material cost of the particulate matter detecting device 100. This may also reduce the size of the particulate matter detecting device 100.

The measurement electrode lead terminal 14a and the heater electrode lead terminal 15a of the sensor element 10 are at least partially disposed inside the second penetration portion 31b. A lead wiring 33 and the like is provided for electrical connection between the measurement electrode lead terminal 14a and the heater electrode lead terminal 15a so that the sensor element 10 and the lead wiring 33 are electrically connected in a remarkably easy way. This makes it possible to effectively prevent separation of the measurement electrode lead terminal 14a and the heater electrode lead terminal 15a from the element substrate 11 as well. The lead wiring 33 denotes the wiring used for electrically connecting the measurement electrode lead terminal 14a and the heater electrode lead terminal 15a with not shown power source and detection portion of the particulate matter detecting device.

The detecting device external cylinder 20 used for the particulate matter detecting device 100 is formed of a metal material, and has an external cylinder body 21 that stores the lead terminal cover member 30 having the sensor element 10 inserted into the penetration portion 31 while holding one end portion 16 (specifically, at least the pair of measurement electrodes 12a, 12b provided at the end portion 16 of the sensor element) of the sensor element 10 exposed outside from its one end face 26. The use of the detecting device external cylinder 20 allows the sensor element 10 and the lead terminal cover member 30 to be stably stored inside the device.

The detecting device external cylinder 20 may be further provided with a rear external cylinder 28 that stores the sensor element 10 and the like and seals inside the detecting device external cylinder 20. Preferably, the external cylinder body 21 and the rear external cylinder 28 are structured such that an end portion of one of them may be fitted with an end portion of the other. Referring to Fig. 1D, the rear external cylinder 28 is fitted with the external cylinder body 21 at the other end face 27 so that the lead terminal cover member 30 having the sensor element 10 inserted into the penetration portion 31 is stored inside the detecting device external cylinder 20 in a pressurized state (pressed against one end portion 36).

It is preferable to provide a wiring protective member 43 such as a grommet inside the rear external cylinder 28. As the wiring protective member 43, it is preferable to use an elastic member formed of a rubber or an elastomer that has a through hole to allow respective wirings 42 to pass therethrough. The wirings 42 are electrically connected with the measurement electrode lead terminal 14a or the heater electrode lead terminal 15a provided on the other end portion of the sensor element 10 while passing through the rear external cylinder 28. Preferably, the respective wirings 42 that penetrate through the wiring protective member 43 are fixed by caulking or welding at either end of the wiring protective member 43.

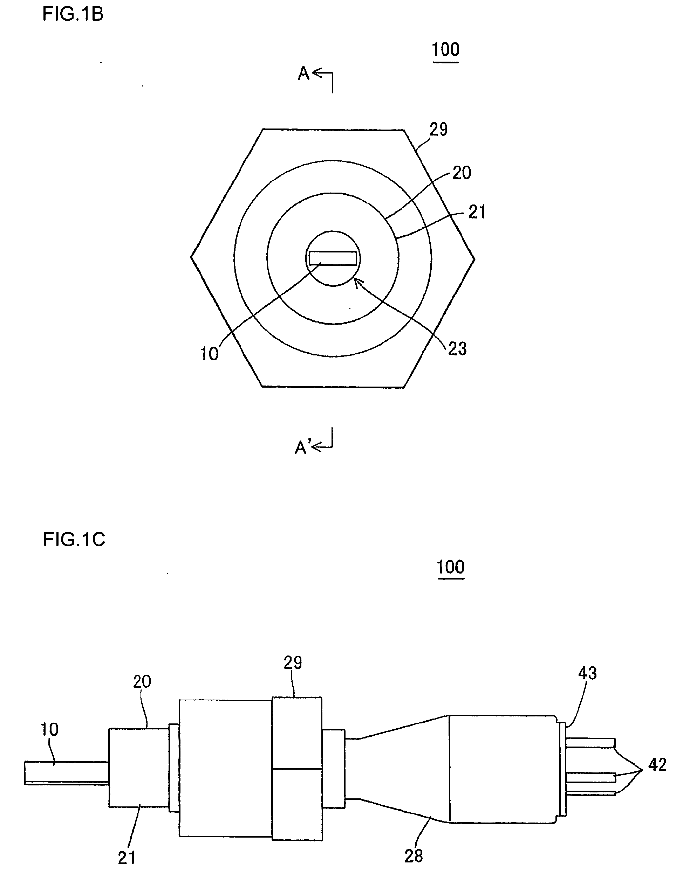

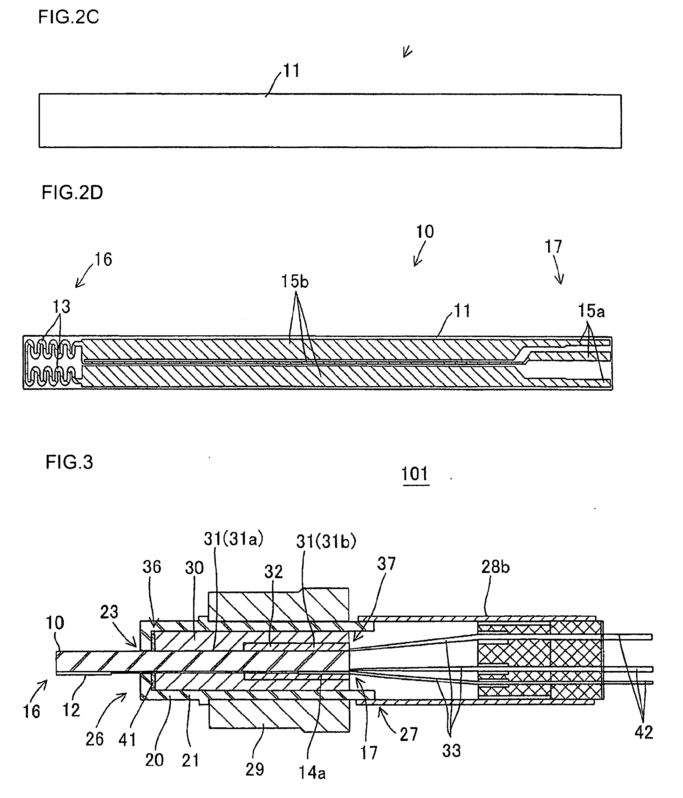

Fig. 1A is a perspective view schematically showing a particulate matter detecting device according to an embodiment of the present invention. Fig. 1B is a front view schematically showing the particulate matter detecting device according to an embodiment of the present invention. Fig. 1C is a side view schematically showing the particulate matter detecting device according to an embodiment of the present invention. Fig. 1D is a schematic view showing a cross section of Fig. 1B taken along line A-A'. Fig. 2A is a plan view schematically showing an upper face of a sensor element used for the particulate matter detecting device according to an embodiment of the present invention. Fig. 2B is a plan view schematically showing a side surface of the sensor element used for the particulate matter detecting device according to an embodiment of the preset invention. Fig. 2C is a plan view schematically showing a lower face of the sensor element used for the particulate matter detecting device according to an embodiment of the present invention. Fig. 2D is a schematic view showing a cross section of Fig. 2B taken along line B-B'.

The particulate matter detecting device according to the embodiment will be described in further detail with respect to each element.

### [1-1] Sensor element:

Referring to Figs. 2A to 2D, the sensor element used for the particulate matter detecting device according to the embodiment has a unidirectionally long flat-plate-like element substrate 11 as the substrate of the sensor element 10. One end portion 16 of the element substrate 11 is provided with at least a pair of the measurement electrodes 12a, 12b, and the heater electrode 13.

The measurement electrode lead terminal 14a and the heater electrode lead terminal 15a are provided at the other end portion 17 of the element substrate 11. Wirings (measurement electrode wiring 14b and heater electrode wiring 15b) for electrically connecting the respective electrodes (measurement electrodes 12 and heater electrode 13) and the respective lead terminals (measurement electrode lead terminal 14a and the heater electrode lead terminal 15a) extend from the one end portion 16 to the other end portion 17 of the element substrate 11.

According to the embodiment, "one end portion of the element substrate (or sensor element)" refers to a range from one end portion of the element substrate to a position corresponding to the length of 50% of the entire length of the element substrate. The phrase "the other end portion of the element substrate (or sensor element)" refers to a range from the other end portion of the element substrate to the position corresponding to the length of 50% of the entire length of the element substrate. Preferably, one end portion of the element substrate refers to a range from one end portion of the element substrate to the position corresponding to the length of 40%, and more preferably, 30% of the entire length of the element substrate. Preferably, the other end portion of the element substrate refers to a range from the other end portion of the element substrate to the position corresponding to the length of 40%, and more preferably, 30% of the entire length of the element substrate. The position between one end portion and the other end portion of the element substrate is defined as the area obtained by removing the one end portion and the other end portion from the element substrate.

Referring to Figs. 2A to 2D, the element substrate (or the sensor element) of the particulate matter detecting device according to the embodiment has a unidirectionally long structure. The longitudinal length is not limited. However, it is preferable to set the length so as to allow efficient sampling of the particulate matter in the exhaust gas when it is inserted into the exhaust gas pipe. In the particulate matter detecting device according to the embodiment, the longitudinal length may be reduced compared with the generally employed particulate matter detecting device. Therefore, it is preferable to set the length of the sensor element to be in the range from 15 to 60 mm, more preferably from 20 to 40 mm, and further preferably, from 25 to 35 mm.

Thickness of the element substrate (length in a direction perpendicular to both "longitudinal direction of the element substrate" and "plane in which the measurement electrode is provided") is not particularly limited. However, it is preferable to set the thickness to be in the range from 0.5 to 2.0 mm. The phrase "thickness of the element substrate" refers to the thickness of the thickest portion in the thickness direction. Width of the element substrate (length in parallel with "plane in which the measurement electrode is provided" and perpendicular to "longitudinal direction of the element substrate") is not particularly limited. However, it is preferable to set the width to be in the range from 1.0 to 5.0 mm. It is preferable to set the longitudinal length of the element substrate to be 10 to 100 times larger than the thickness of the element substrate, and 3 to 100 times larger than the width of the element substrate. The above structure allows the heater electrode and the heater electrode wiring to be provided inside the element substrate, for example.

The element substrate 11 may be a longitudinally extending plate-like configuration with rectangular cross section. Alternatively, it may be a bar-like configuration with circular or elliptical cross section. It may have a unidirectionally long configuration or arbitrary configuration.

Preferably, the aforementioned element substrate is formed of a tape-like ceramic material (ceramic green sheet). For example, at least a pair of measurement electrodes, the measurement electrode wiring, the heater element, the heater electrode wiring, and the respective lead terminals are provided on the upper face or the back surface of the ceramic green sheet so as to efficiently produce the sensor element with a predetermined configuration. In the case where the heater electrode and the heater electrode wiring are provided inside the element substrate, preferably, the element substrate is formed by laminating multiple ceramic green sheets. For example, the multiple tape-like ceramics are laminated while interposing the heater electrode and the heater electrode wiring thereamong, and having at least a pair of measurement electrodes, the measurement electrode wiring and the respective lead terminals provided on the upper face or the back surface of the laminated body. This makes it possible to efficiently produce the sensor element with a predetermined configuration.

Preferably, the element substrate is formed of the material selected from the group including alumina, cordierite, mullite, glass, zirconia, magnesia, and titania. In particular, it is preferable to use alumina. Each of those materials for forming the element substrate exhibits excellent heat-resistant and insulation breakdown resistance properties.

Preferably, the measurement electrode is formed of metal with excellent heat-resistant and corrosion resistance, for example, platinum, iridium, palladium, ruthenium, osmium, rhodium, silver, nickel, and gold. Especially, it is preferable to use platinum.

At least a pair of the measurement electrodes is provided to face with each other to measure change in electrical property between oppositely provided measurement electrodes. It is preferable to set the distance between the measurement electrodes so that the change in the electrical property between the measurement electrodes is clearly measured when the particulate matter is adhered to the portion between the measurement electrodes and the region therearound. For example, it is preferable to set the distance to be in the range from approximately 0.2 to 10 mm.

Each of the measurement electrodes is linearly formed. The linearly formed electrodes may be provided in parallel with each other. Likewise the sensor element 10 shown in Fig. 2A, preferably, each of the measurement electrodes 12a, 12b as pair of the measurement electrodes 12 is a comb-tooth electrode that has a plurality of comb-tooth portions 12x arranged in a plane and a comb-spine portion 12y having one end portion for joining the plurality of comb-tooth portions. Preferably, each comb-tooth portion 12x of the respective measurement electrodes 12a, 12b is so arranged to be engaged with one another. This structure makes it possible to broaden the region where the pair of the measurement electrodes 12a, 12b are arranged to face with each other, thus further improving measurement sensitivity and measurement accuracy of the electrical property.

The thickness of the measurement electrode is not particularly limited. However, it is preferable to set the thickness to be in the range from 2 to 30 µm. The width of the measurement electrode is not particularly limited, but it is preferable to set the width to be in the range from 30 to 300 µm. The "thickness of the measurement electrode" refers to the length (thickness) of the measurement electrode in the direction orthogonal to the element substrate surface. Assuming that the measurement electrode has a linear or a comb-tooth structure, "width of the measurement electrode" refers to the length of the element substrate surface in the direction orthogonal to the longitudinal direction of the measurement electrode.

At least a pair of the measurement electrodes is electrically connected with the measurement electrode lead terminal provided at the other end face of the element substrate via the measurement electrode wirings.

It is preferable to use the metal with excellent heat-resistant and corrosion resistance for forming the measurement electrode lead terminal. Specifically, platinum, iridium, palladium, ruthenium, osmium, rhodium, silver, gold, and nickel may be used, and more preferably, platinum may be used. The thickness of the measurement electrode lead terminal is not limited. However, it is preferable to be in the range from 2 to 30 µm, for example. The width of the measurement electrode lead terminal is not limited as well, but it is preferable to be in the range from 100 to 1000 µm, for example.

It is preferable to use the metal material with excellent heat-resistant and corrosion resistance for forming the measurement electrode wiring, for example, platinum, iridium, palladium, ruthenium, osmium, rhodium, silver, nickel and gold. Especially, it is preferable to use platinum. The thickness of the measurement electrode wiring is not particularly limited, but it is preferable to set the thickness to be in the range from 2 to 30 µm. The width of the measurement electrode wiring is not particularly limited as well. For example, it is preferable to set the width to be in the range from 100 to 500 µm.

The element substrate is provided with the heater electrode for heating the sensor element. The use of the heater electrode ensures to oxidize the particulate matter adhered to the measurement electrodes and the region therearound under heat (burn out). Upon measurement of mass of the particulate matter, temperature of the sensor element may be adjusted to the desired value so that the change in the electrical property between at least the pair of the measurement electrodes is stably measured. Especially, it is preferable to use the heater electrode wiring with the resistance value lower than that of the heater electrode so that the portion at which the heater electrode provided is selectively heated. For this, more metal material is required for forming the heater electrode wiring compared to the other wiring. In case of using such noble metal as platinum, the material cost for the heater electrode wiring may occupy a large part of the material cost for producing the sensor element. The particulate matter detecting device according to the embodiment makes it possible to reduce the length of the sensor element, and accordingly, the length of the heater electrode wiring, resulting in significant reduction in the manufacturing cost of the particulate matter detecting device.

In the particulate matter detecting device according to embodiment, the heater electrode and the heater electrode wiring are provided inside the element substrate so that the material cost is further reduced. The heater electrode and the heater electrode wiring provided inside the element substrate are not directly in contact with the exhaust gas. So the less costly conductive material may be used for forming the heater electrode and the heater electrode wiring.

In the case where the heater electrode is provided on an inner layer, such material as tungsten, molybdenum, platinum, copper, aluminum, silver, nickel and iron may be used for forming the heater electrode and the heater electrode wiring. Especially, it is preferable to use tungsten. In the case where the heater electrode is provided on the upper face or the back surface of the sensor element, the material with excellent heat-resistant and corrosion resistance, for example, platinum, iridium, palladium, ruthenium, osmium, rhodium, silver and gold may be used. Especially, it is preferable to use platinum.

The thickness of the heater electrode is not particularly limited, but it is preferable to be in the range from 1 to 10 µm. Preferably, the thickness of the heater electrode wiring is larger than that of the heater electrode, and it is in the range from 5 to 20 µm. The aforementioned structure allows the heater electrode to be heated well. For example, if the thickness of the heater electrode wiring is smaller than that of the heater electrode, the resistance value of the heater electrode wiring is increased, and accordingly, the heater electrode wiring is heated. The width of the heater electrode is not particularly limited. For example, it is preferable to be in the range from 0.2 to 1.0 µm. The width of the heater electrode wiring is not particularly limited. It is preferable to be in the range from 0.5 to 2.0 µm.

Preferably, the heater electrode is structured so that the metal material as fine wires is densely arranged in the same plane at intervals. Upon application of voltage to the thus structured heater electrode, the metal material as the fine wires may be well heated. The heater electrode is not limited to the structure as shown in Fig. 2D. For example, it may be configured so that the metal materials as fine wire are arranged to form a wave-like shape or serpentine shape.

Preferably, the heater electrode is provided at least at one end face in a range that allows good heating of the region where the measurement electrode is located. Specifically, it is preferable to provide the measurement electrode in the range that includes the one where the measurement electrode is provided. The aforementioned structure may appropriately eliminate the particulate matter attached to the measurement electrode.

As the material for forming the heater electrode lead terminal, platinum, iridium, palladium, ruthenium, osmium, rhodium, silver, gold and the like may be used. Especially, it is preferable to use platinum. The thickness of the heater electrode lead terminal is not partially limited, but it may be in the range from 2 to 30 µm.

In the case where the heater electrode wiring and the heater electrode lead terminal are arranged in the same plane of the element substrate, the heater electrode wiring may be extended to be connected to the heater electrode lead terminal. In the case where the heater electrode wiring is provided inside the element substrate, or the heater electrode wiring and the heater electrode lead terminal are provided in different planes, they are inter-layer connected through via hole, or with the electrode on the side surface of the sensor element.

The electrical inter-layer connecting between the heater electrode wiring and the heater electrode lead terminal may be conducted through via holes formed in the element substrate. Two or more via holes may be formed in the heater electrode wiring and the heater electrode lead terminal for performing electrical connecting. In the case where the electrode is extended to reach the side surface of the sensor element, it is preferable to apply insulating coat such as glass coating to the side surface of the sensor element. The aforementioned structure may effectively prevent electrical contact between the wiring portion on the side surface of the sensor element and other elements of the particulate matter detecting device.

It is preferable to fix the measurement electrode lead terminal and the heater electrode lead terminal, and the respective lead wirings using sealant that is applied to fill in the second penetration portion of the lead terminal cover member. It is also preferable to preliminarily bond the respective lead terminals to the corresponding lead wirings with welding. Electrical connecting may further be ensured by the aforementioned structure.

### [1-2] Lead terminal cover member:

Referring to Figs. 1A to 1D, the particulate matter detecting device 100 according to the embodiment is provided with the hollow columnar lead terminal cover member 30 that allows the sensor element 10 to be inserted into the penetration portion 31 that penetrates in the axial direction so that the sensor element 10 is held inside the detecting device external cylinder 20. The lead terminal cover member 30 is held while being inserted into the detecting device external cylinder 20 as the external cylinder of the particulate matter detecting device 100.

The lead terminal cover member 30 is provided between the detecting device external cylinder 20 and the sensor element 10. It may be structured to be large enough to allow the sensor element 10 to be inserted into the penetration portion 31 that penetrates from one end face 36 to the other end face 37, and to expose the measurement electrodes 12 of the sensor element 10 from the other end face 26 of the detecting device external cylinder 20. However, the configuration of such member is not limited. For example, it may have a columnar outer circumferential shape to be inserted into the detecting device external cylinder 20, and have the penetration portion 31 therein that allows the sensor element 10 to penetrate therethrough as shown in Fig. 1D. The lead terminal cover member 30 shown in Fig. 1D has a cylindrical shape. However, it may be formed to have a quardrangular end face, or may be formed as a polygonal prismatic body.

The penetration portion 31 formed in the aforementioned lead terminal cover member 30 includes the first penetration portion 31a that has its cross section area perpendicular to the penetration direction corresponding to the cross section of the sensor element 10 perpendicular to the longitudinal direction in the range with the predetermined length from the one end face 36 of the lead terminal cover member 31, and the second penetration portion 31b that penetrates from the first penetration portion 31a to the other end face 37 of the lead terminal cover member 30, and has its cross section area in the direction perpendicular to the penetration direction is formed to be larger than that of the first penetration portion 31a. The gap between the second penetration portion 31b and the sensor element 10 inserted into the second penetration portion 31b is filled with the electrical insulating sealant 32 to fix the sensor element 10 and the lead terminal cover member 30.

In the case where the sensor element 10 is inserted from the other end face 37 of the lead terminal cover member 30, the aforementioned structure allows the sensor element 10 to penetrate through the lead terminal cover member 30 while having one end portion 16 exposed. The electrical insulating sealant 32 further allows the sensor element 10 to be fixed well.

As the ceramic material that exhibits electrical insulating property for forming the lead terminal cover member 30, it is preferable to use at least one kind of ceramic selected from the group including alumina, cordierite, mullite, glass, zirconia, magnesia, titania, and silicon. More specifically, it is preferable to use alumina, cordierite, and zirconia.

The length of the lead terminal cover member 30 (that is, the length from the one end face 26 to the other end face 27 of the lead terminal cover member 30) is not particularly limited. However, it is preferable to be in the range from 20 to 80 %, and more preferably, from 60 to 70% of the longitudinal length of the sensor element 10. The aforementioned structure allows the sensor element 10 to be well fixed, and further allows the lead terminal cover member 30 to coat the respective lead terminals 14a and 15a (see Fig. 2D) for ensuring electrical connecting of the respective lead terminals 14a and 15a.

The lead terminal cover member 30 is held while being inserted into the detecting device external cylinder 20 as the external cylinder of the particulate matter detecting device 100. It is preferable to form the outer circumference of the cross section of the lead terminal cover member 30 perpendicular to the longitudinal direction so that it is inserted inside the detecting device external cylinder 20 with no gap therebetween. The aforementioned structure allows the lead terminal cover member 30 and the sensor element 10 to be stably held.

The penetration portion formed in the lead terminal cover member includes the first penetration portion formed in the predetermined range with a predetermined length from one end face, and the second penetration portion formed from the first penetration portion to the other end face. When inserting the sensor element, the cross section of the first penetration portion is substantially the same as that of the sensor element. The cross section of the second penetration portion is larger than that of the first penetration portion. When inserting the sensor element, the gap is generated between the second penetration portion and the sensor element. The respective lead terminals of the sensor elements, and further the lead wirings for electrically connecting with the respective lead terminals are provided in the gap. The gap is filled with the electrical insulating sealant to fix the sensor element and the lead wirings.

Preferably, the second penetration portion 31b of the lead terminal cover member 30 is formed to be large enough to generate the gaps between the upper/lower faces and the sensor element 10 in the thickness direction in the range from 0.1 to 2.5 mm, and more preferably, from 1.0 to 2.0 mm, and further preferably, from 1.4 to 1. 6 mm. If the gap is equal to 0.1 mm or smaller, the amount of the sealant to be filled is too small to sufficiently fix the sensor element. If the gap exceeds 2.5 mm, the diameter of the second penetration portion becomes so large that the thickness of the lead terminal cover member corresponding to the second penetration portion is reduced, thus deteriorating the strength. It is preferable to set the thickness of the lead terminal cover member corresponding to the second penetration portion to 0.5 mm or larger.

It is preferable to set the length of the second penetration portion formed in the lead terminal cover member in the penetrating direction to be in the range from 0.1 to 0.8 times, more preferably, 0.2 to 0.5 times, and further preferably, 0.3 to 0.4 times longer than the length of the lead terminal cover member from the one end face to the other end face. It is preferable to set the length of the second penetration portion in the penetrating direction to be in the range from 0. 05 to 0. 5 times, and more preferably, 0. 2 to 0. 3 times longer than the length of the sensor element in the longitudinal direction. The aforementioned structure allows the sensor element to be well held. If the second penetration portion is too short, the range of the portion filled with the sealant is reduced, thus failing to fix the sensor element sufficiently. The lead terminal of the sensor element may not be sufficiently stored in the second penetration portion. On the contrary, if the second penetration portion is too long, the strength of the lead terminal cover member by itself may be deteriorated.

The gap between the second penetration portion 31b of the lead terminal cover member 30 and the sensor element 10 inserted into the second penetration portion 31b is filled with the electrical insulating sealant 32. As the sealant 32, at least one material selected from the group including an inorganic adhesive, a glass material and a heat resistant resin may be used. More specifically, the inorganic adhesive that is composed mostly of alumina using alcohols solvent may be used.

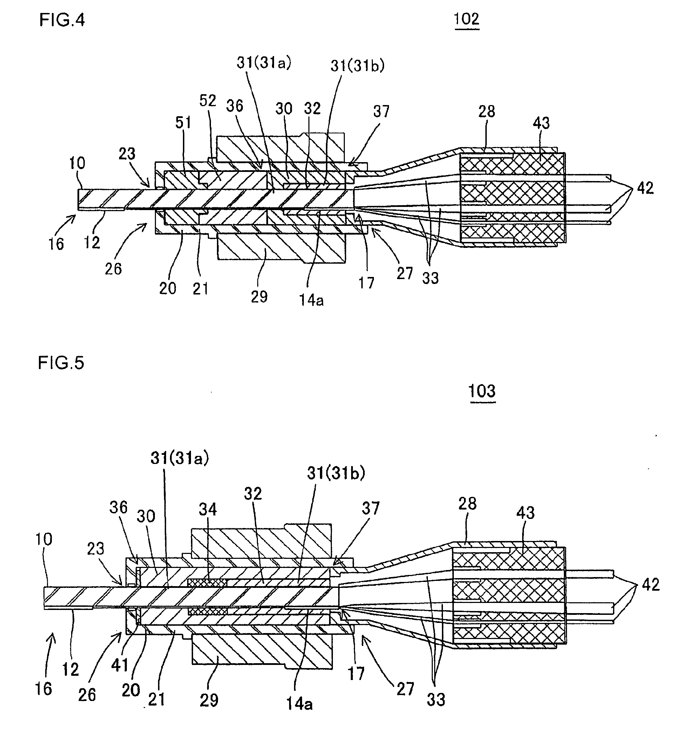

Referring to Fig. 1D, the entire region of the gap between the second penetration portion 31b and the sensor element 10 inserted into the second penetration portion 31b is filled with the electrical insulating sealant 32. As a particulate matter detecting device 103 in Fig. 5 shows, the gap between the second penetration portion 31b and the sensor element 10 inserted into the second penetration portion 31b on the one end portion 36 of the lead terminal cover member 30 may be filled with the electrical insulating inorganic powder 34, and the gap at the other end portion 37 of the lead terminal cover member 30 may be filled with the sealant 32 as described above. That is, the sealant does not have to be applied to fill the entire region of the gap. The gap at the leading end may be filled with the electrical insulating inorganic powder 34, and the sealant 32 may be filled to plug the inorganic powder 34.

The aforementioned structure allows the inorganic powder 34 to effectively prevent leakage (leakage of the exhaust gas) through the gap between the sensor element 10 and the lead terminal cover member 30. As the inorganic powder, at least one kind of the electrical insulating inorganic powder selected from the group including talc powder, calcium carbonate powder, dolomite powder, and mica powder may be used. Fig. 5 is a sectional view schematically showing a particulate matter detecting device according to another embodiment of the present invention. Fig. 5 shows the same cross section as illustrated in Fig. 1D. The same elements as those of the particulate matter detecting device shown in Fig. 1D are designated with the same codes, and explanations thereof, thus will be omitted.

Referring to Fig. 4, a particulate matter detecting device 102 may be configured so that an electrical insulating insulator 51 is further provided inside the detecting device external cylinder 20 on the one end portion 36, and a gap between the insulator 51 and the lead terminal cover member 30 is filled with an electrical insulating inorganic powder 52. In the particulate matter detecting device 102 shown in Fig. 4, the one end portion 16 of the sensor element 10 that penetrates through the penetration portion 31 of the lead terminal cover member 30 further penetrates through the filled inorganic powder 52 and the insulator 51, and is exposed from the one end face 26 of the detecting device external cylinder 20.

The electrical insulating inorganic powder 52 and the electrical insulating insulator 51 are further provided inside the detecting device external cylinder 20 to effectively prevent leakage from the inside of the detecting device external cylinder 20 (leakage of the exhaust gas). Fig. 4 is a view schematically showing a cross section of the particulate matter detecting device according to another embodiment of the present invention. Fig. 4 shows the same cross section as illustrated in Fig. 1D. The same elements as those of the particulate matter detecting device shown in Fig. 1D are designated with the same codes, and explanations thereof, thus will be omitted.

The electrical insulating insulator 51 may be formed of the same ceramic material as the one for forming the lead terminal cover member 30. It is possible to employ the same inorganic powder as the inorganic powder 34 used for the particulate matter detecting device 103 shown in Fig. 5 as the electrical insulating inorganic powder 52 to be filled in the gap between the insulator 51 and the lead terminal cover member 30.

### [1-3] Detecting device external cylinder:

The detecting device external cylinder is an outer sheath body of the particulate matter detecting device, which stores the sensor element and lead terminal cover member therein. The particulate matter detecting device according to the embodiment includes a hollow columnar external cylinder body 21 made of metal for storing the lead terminal cover member 30 having the sensor element 10 inserted into the penetration portion 31 while having one end portion 16 of the sensor element 10 exposed outside (specifically, at least a pair of measurement electrodes 12a, 12b provided at the one end portion 16 of the sensor element 10).

As Figs. 1A to 1D show, the external cylinder body 21 used for the particulate matter detecting device according to the embodiment has an open frontal area 23 at one end face 26 from where the one end portion 16 of the sensor 10 on which the measurement electrodes 12a, 12b are provided is exposed outside.

The material for forming the external cylinder body 21 is not limited. However, it may be formed of the metal material such as a stainless steel, iron, nickel, platinum, kovar, copper, gold, molybdenum, and tungsten. Especially, it is preferable to use the stainless steel as less costly material with high corrosion resistance.

The external cylinder body 21 is partially inserted into a threaded bore with the same size as the diameter of the detecting device external cylinder, which is formed in the pipe through which the stack gas or diesel engine exhaust gas passes. The threaded bore and the external cylinder body 21 are fixed to provide the particulate matter detecting device. For example, in the particulate matter detecting device 100 shown in Figs. 1A to 1D, the detecting device external cylinder 20 includes a screw nut 29 provided around the outer periphery of the external cylinder body 21. The particulate matter detecting device 100 may be fixed to the pipe through which the exhaust gas passes using the screw nut 29.

It is preferable to provide a metallic washer (washer) 41 between the external cylinder body 21 and the lead terminal cover member 30 for storing the lead terminal cover member 30 inside the external cylinder body 21. The aforementioned structure effectively prevents intrusion of the exhaust gas from the open frontal area 23 of the external cylinder body 21 to the inside. The material for forming the washer 41 is not particularly limited. However, it is preferable to use such metal as nickel, copper, stainless steel, iron, gold, platinum, and kovar.

The particulate matter detecting device 100 according to the embodiment may further be provided with the rear external cylinder 28 for sealing the inside of the external cylinder body 21. Preferably, the external cylinder body 21 and the rear external cylinder 28 are configured so thon one end portion side of any of the elements is allowed to be fitted with the corresponding end of the other element. Referring to Fig. 1D, the end of the external cylinder body 21 at the other end face 27 is fitted with the rear external cylinder 28 so as to bring the sensor element 10 and the lead terminal cover member 30 into a storage state under pressurization. The rear external cylinder 28 may be formed of the same metal material as that for forming the external cylinder body 21.

Fig. 1D shows an example that the rear external cylinder 28 is disposed at the inner side of the other end portion 27 of the external cylinder body 21 so as to be fitted with the external cylinder body 21. Referring to Fig. 3, a particulate matter detecting device 101 may be configured that the rear external cylinder 28 that may be fitted with the other end portion 27 of the external cylinder body 21 of the detecting device external cylinder 20 is further provided so as to be fitted with the other end portion 27 thereof, and a fitted portion between the external cylinder body 21 of the detecting device external cylinder 20 and the rear external cylinder 28 is welded.

The aforementioned structure makes it possible to solidly fix the lead terminal cover member 30 inside the external cylinder body 21 by the external cylinder body 21 and the rear external body 28. Fig. 3 is a view schematically showing the cross section of the particulate matter detecting device according to another embodiment of the present invention. Fig. 3 shows the same cross section as illustrated in Fig. 1D. The same elements as those of the particulate matter detecting device shown in Fig. 1D are designated with the same codes, and explanations thereof, thus will be omitted.

### [1-4] Other components:

Mass of particulate matter is detected by the particulate matter detecting device according to the embodiment through the method for measuring impedance calculated based on electrostatic capacitance between at least the pair of measurement electrodes, and calculating the mass of the particulate matter adhered between the measurement electrodes from change in the impedance so as to detect the particulate matter (mass) contained in the exhaust gas. Accordingly, it is preferable to further add a detection unit (hereinafter referred to as "measurement unit") for measuring the impedance between the measurement electrodes to the particulate matter detecting device according to the embodiment. As the detection unit, an LCR meter and an impedance analyzer may be used for measuring not only electrostatic capacitance but also impedance.

It is preferable to further add a power source for heater to the particulate matter detecting device according to the embodiment for applying voltage to the heater electrode. As the power source for heater, the constant-current power source may be used.

The particulate matter detecting device according to the embodiment may be provided with a domal gas reservoir member that is provided on one end face of the detecting device external cylinder for accumulating gas to be measured, which contains particulate matter (hereinafter simply referred to as "gas") in a portion at the side of one end face of the detecting device external cylinder (in other words, one end portion of the sensor element on which at least a pair of measurement electrodes are provided while being exposed outside from one end face of the detecting device external cylinder). The gas reservoir member has at least two gas passage open frontal areas that allow inflow of the gas to be measured and the gas held inside the gas reservoir member. This makes it possible to accumulate the gas flow to be measured, which contains particulate matter inside the gas reservoir member while allowing appropriate gas flow.

The added gas reservoir member allows particulate matter contained in the gas for measurement to be well adhered to at least a pair of the measurement electrodes of the sensor element.

### [2] Method for manufacturing particulate matter detecting device

A method for manufacturing the particulate matter detecting device according to the embodiment will be described taking the particulate matter detecting device 100 according to the embodiment as shown in Figs. 1A to 1D as an example.

### [2-1] Manufacturing of sensor element

A method for manufacturing the sensor element will be described first. The sensor element may be manufactured through the process for forming a plurality of ceramic green sheets (hereinafter simply referred to as "green sheet") for the element substrate from the ceramic material, arranging at least a pair of the measurement electrodes, the heater electrode, the respective lead terminals, and the respective wirings on the plurality of green sheets, and laminating those green sheets. The method for producing the sensor element will be described in more detail.

### [2-1A] Preparation of forming material

At least one kind of the raw ceramic material (raw material for dielectric substance) selected from the group including alumina, cordierite forming material, mullite, glass, zirconia, magnesia, and titania is mixed with the other component used as the raw forming material to provide a slurry forming material. It is preferable to use the aforementioned ceramic material. However, it is not limited to the one as described above. It is preferable to use a binder, a plasticizer, a dispersant, and a dispersion medium as the other raw material.

An arbitrary type of the binder either aqueous binder or non-aqueous binder may be used without being limited. It is preferable to use methylcellulose, polyvinyl alcohol, and polyethylene oxide as the aqueous binder. It is preferable to use polyvinyl butyral, acrylic resin, polyethylene, and polypropylene as the non-aqueous binder. It is preferable to use (meta) acrylic resin, (meta) acrylic ester copolymer, and acrylic ester-methacrylate ester copolymer as the acrylic resin.

It is preferable to add 3 to 20, and more preferably, 6 to 17 parts by mass of the binder to 100 parts by mass of the ceramic material. The binder added at the above ratio prevents crack of the green sheet upon such process as formation thereof using the slurry raw forming material, drying and baking.

As the plasticizer, glycerin, polyethylene glycol, dibutyl phthalate, di-2-etylhexyl phtahalate, and diisononyl phthalate may be used.

It is preferable to add 30 to 70 parts by mass, or more preferably, 45 to 55 parts by mass of the plasticizer to 100 parts by mass of the added binder. If 70 or more parts by mass of the plasticizer are added, the green sheet becomes so soft, and accordingly, it is likely to be deformed in the sheet processing process. In case of 30 or less parts by mass, the green sheet becomes too hard, thus easily causing crack when it is bent, resulting in deteriorated handling performance.

As the aqueous disperser, anionic system surfactant, wax emulsion, and pyridine may be used, and as the non-aqueous disperser, aliphatic acid, ester phosphate, synthetic surfactant may be used.

It is preferable to mix 0.5 to 3 parts by mass, and more preferably, 1 to 2 parts by mass of the disperser with 100 parts by mass of the ceramic material. In case of 0.5 or less parts by mass of the disperser, dispersibility of the raw ceramic material may be deteriorated, thus causing crack in the green sheet. In case of 3 or more parts by mass, dispersibility may be kept but impurities resulting from baking increases.

As the dispersing medium, water may be used. It is preferable to mix 50 to 200 parts by mass, and more preferably, 75 to 150 parts by mass of the dispersing medium with 100 parts by mass of the ceramic material.

The above-prepared materials are sufficiently mixed using the alumina pot and alumina ball to prepare slurry forming material for producing the green sheet. Those materials may be mixed using ball mill with mono ball.

The thus prepared slurry forming material for producing the green sheet is stirred under reduced pressure so as to establish the predetermined viscosity. It is preferable to set viscosity of the slurry forming material obtained in the process of preparing the forming material to 2.0 to 6.0, more preferably, 3.0 to 5.0, and further preferably 3.5 to 4.5 Pa·s. It is preferable to adjust the viscosity in the range as described above to facilitate formation of the slurry into the sheet. If the slurry viscosity is too high or too low, it becomes difficult to form the slurry. The viscosity of the slurry is the measurement value of type B viscometer.

### [2-1B] Forming process:

The slurry forming material obtained in the aforementioned method is formed into a tape to prepare a unidirectionally long green sheet. The forming process is not particularly limited so long as the forming material is formed into the green sheet using known method, for example, doctor blade method, press forming method, rolling method, and calendar roll method. It is preferable to set thickness of the green sheet to be prepared in the range from 50 to 800 µm.

### [2-1C] Formation of green sheet laminated structure

At least a pair of measurement electrodes, heater electrode, and wirings and lead terminals that are electrically connected with the respective electrodes are provided on the surface of the thus obtained green sheet. For example, conductive paste for measurement electrode used for forming the measurement electrodes, the measurement electrode wirings and the measurement electrode lead terminals are prepared. The thus obtained conductive paste is printed on the corresponding position of the green sheet as shown in Fig. 2A to form the measurement electrode and the respective wiring, and the lead terminals.

The conductive paste used for forming the heater electrode, heater electrode wirings, and the heater electrode lead terminal. The thus prepared conductive paste is printed on the corresponding position of the respective green sheets as shown in Fig. 2C so as to form the heater electrode, and the respective wirings and lead terminals.

The aforementioned conductive paste may be prepared by adding the solvent such as the binder and terpineol to the powder that contains at least one selected from the group including gold, silver, platinum, nickel, molybdenum, and tungsten in accordance with each material required for forming the respective electrodes and wirings, and sufficiently kneading the mixture using a triple roll mill. The printing method of the conductive paste is not particularly limited, but screen printing may be used, for example.

It is preferable to use the metal material with excellent heat-resistant and corrosion resistance such as platinum, iridium, palladium, ruthenium, osmium, rhodium, silver and gold for producing the measurement electrodes, the measurement electrode wirings and the measurement electrode lead terminals.

In the case where the heater electrodes and the heater electrode wirings are buried in the element substrate, it is preferable to use the metal material such as tungsten, molybdenum, platinum, copper, aluminum, silver, nickel and iron for forming those elements. In the case where they are provided on the upper face or the back surface of the element substrate, it is preferable to use the metal material with excellent heat-resistant and corrosion resistance such as platinum, iridium, palladium, ruthenium, osmium, rhodium, silver and gold for forming those elements. It is preferable to use the metal material with excellent heat-resistant and corrosion resistance such as platinum, iridium, palladium, ruthenium, osmium, rhodium, silver and gold for forming the heater electrode led terminal.

In the specific method for forming the respective electrodes, wirings and lad terminals, at least a pair of the measurement electrodes is provided on one end portion side on one surface of one of the plurality of green sheets, and the measurement electrode lead terminal is provided on the other end portion. Then the wiring extending from the respective electrodes toward the measurement electrode lead terminals (wiring extending from one end portion to the other end portion) is provided to form the green sheet with a pair of the measurement electrodes.

The heater electrode is provided on one end portion side on one surface of the other green sheet. The wiring extending from the heater electrode toward the other end portion is provided to form the green sheet with the heater electrode. The heater electrode wiring is interlayer connected to the heater electrode lead terminal provided on the back surface via the green sheet.

The plurality of the thus obtained green sheets are laminated in accordance with configuration of the sensor element 10 as shown in Figs. 2A to 2C to form a green sheet laminated body.

### [2-1D] Baking:

The obtained green sheet laminated body is dried and baked to provide the sensor element. More specifically, the obtained green sheet laminated body is dried at a temperature ranging from 60 to 150°C, and baked at a temperature in the range from 1200 to 1600°C to prepare the particulate matter detecting device. If the green sheet contains the organic binder, it is preferable to degrease at the temperature ranging from 400 to 800°C before baking. In this way, the sensor element 10 as shown in Figs. 2A to 2C may be obtained.

### [2-2] Preparation of lead terminal cover member and detecting device external cylinder:

Besides the aforementioned sensor element, the lead terminal cover member and the detecting device external cylinder are prepared. The lead terminal cover member is prepared through the process in which the cylindrical die is sealed with the predetermined powder for forming under pressure, then the insulating ceramic is prepared by baking at high temperature, and the obtained insulating ceramic is cut into a predetermined shape.

The detecting device external cylinder is prepared by subjecting the cylindrical metal or alloy pipe to press processing, forge processing or cut processing.

### [2-3] Assembly of particulate matter detecting device:

The wiring (lead wiring) for electrically connecting the power source and measurement portion is connected to the respective lead terminals on the sensor element that has been manufactured from the green sheet as described above. The connection method is not particularly limited. It is preferable to conduct welding.

The sensor element is inserted into the penetration portion from the other end face of the lead terminal cover member. The sensor element is penetrated so that its portion provided with the measurement electrodes of the sensor element is exposed from the one end face of the lead terminal cover member while having the respective lead terminals coated with the lead terminal cover member (especially the second penetration portion).

Thereafter, the gap between the sensor element and the second penetration portion of the lead terminal cover member is filled with the electrical insulating sealant (for example, inorganic adhesive and glass material).

In the state where the sensor element is inserted and fit with the penetration portion of the lead terminal cover member, the lead terminal cover member is placed inside the detecting device external cylinder (external cylinder body) to form the particulate matter detecting device. At this moment, preferably, the rear external cylinder is fitted to the other end face of the external cylinder body to store the lead terminal cover member having the sensor element inserted into the penetration portion in the pressurization state (that is, in the pressed state against the one end face of the external cylinder body). It is preferable to provide the metallic washer (washer) between the external cylinder body and the lead terminal cover member in need.

With the manufacturing method, the particulate matter detecting device according to the embodiment may be effectively produced. The method for manufacturing the particulate matter detecting device according to the embodiment is not limited to the one as described above. Examples

The present invention will be explained in further detail by the following examples. However, the present invention is not limited to those examples.

### (Example 1)

In the example, a sensor element having a pair of measurement electrodes provided on a surface of a unidirectionally long flat-plate-like element substrate on one end portion side, and a heater electrode provided on the back surface is produced. The sensor element is inserted into the penetration portion 31 of the lead terminal cover member 30 as shown in Figs. 1A to 1D. It is further provided inside the detecting device external cylinder 20 to form the particulate matter detecting device.

### (Producing sensor element)

### (Preparation for forming material)

Alumina as the dielectric material, polyvinyl butyral as the binder, di-2-ethylhexyl phthalate as the plasticizer, sorbitan trioleate as the disperser, and organic solvent as the dispersion medium (xylene:butanol=6:4 (mass ratio)) are mixed in the alumina pot to prepare the slurry forming material for producing the green sheet. In the example, 7 parts by mass of the binder, 3.5 parts by mass of the plasticizer, 1.5 parts by mass of the disperser, and 100 parts by mass of the organic solvent are used to 100 parts by mass of alumina.

The thus obtained slurry forming material for producing the green sheet is agitated under reduced pressure to perform defoaming and adjust the viscosity to 4 Pn·s. The viscosity of the slurry is measured by the type B viscometer.

### (Forming process)

The slurry forming material obtained from the aforementioned method was subjected to the forming process into the sheet through the doctor blade method. The thickness of the green sheet is set to 600 µm.

A pair of measurement electrodes, measurement electrode wirings, and measurement electrode lead terminal are provided on a surface of a single green sheet. A heater electrode, a heater electrode wiring, and a heater electrode lead terminal are provided on a surface of another green sheet.

The conductive paste for forming the measurement electrode and the like is prepared by mixing platinum powder, 2-ethyl hexanol as the solvent, polyvinyl butyral as the binder, di-2-ethylhexyl phthalate as the plasticizer, sorbitan trioleate as the disperser, alumina as a symbiotic base with the green sheet, and glass frit as sintering aids, which are sufficiently kneaded using the stone mill and the triple roll mill (mass ratio is set to platinum : alumina: glass frit : 2-ethyl hexanol : polyvinyl butyral: di-2-ethylhexyl phthalate : sorbitan triol = 80:15:5:50:7:3.5:1).

The measurement electrode with a comb-tooth shape is set to have width of 100 µm and thickness of 10 µm. The thickness of the measurement electrode lead terminal is 20 µm. The measurement electrode wiring is set to have the width of 300 µm, thickness of 10 µm, and length of 23 mm. The length from the leading end of the measurement electrode to the terminal end of the measurement electrode lead terminal is set to 29 mm.

The heater electrode is set to have the width of 440 µm and the thickness of 10 µm, and the thickness of the heater electrode lead terminal is set to 20 µm. The heater electrode wiring is set to have the width of 1.0 mm, the thickness of 10 µm, and the length of 20 mm. The length from the leading end of the heater electrode to the terminal end of the heater electrode lead terminal is set to 29 mm.

Green sheets are laminated to form the green sheet laminated body (unbaked sensor element) so that the one on which the measurement electrodes are provided is set as the upper face for the element substrate, and the one on which the heater element is provided is set as the back surface. Laminated green sheets are formed under pressurization using a uniaxial press machine capable of heating the green sheet.

### (Baking)

The obtained unbaked sensor element is dried at 120°C, and baked at 1570°C to produce the sensor element. The thus produced sensor element has the length of 30.5 mm, width of 2.8 mm, and thickness of 1.0 mm.

### (Preparation of lead terminal cover member)

The hollow cylindrical lead terminal cover member is produced using the same forming material as the one used for producing the lead terminal cover member.

The obtained lead terminal cover member has a cylindrical structure with an outer diameter of 6 mm and length of 20 mm, and has a penetration portion formed therein for allowing an insertion of the sensor element. The penetration portion includes a first penetration portion that has a cross section area perpendicular to the penetration direction substantially the same as that of the sensor element perpendicular to the longitudinal direction in the range with the length of 13 mm from one end face of the lead terminal cover member (rectangle with the size of 1.2 mm x 3.0 mm), and a second penetration portion that penetrates from the first penetration portion to the other end face of the lead terminal cover member and has the cross section area perpendicular to the penetration direction to be larger than that of the first penetration portion. The second penetration portion is formed to have the size so that a gap of approximately 0.8 mm is formed with respect to the outer circumference of the sensor element (rectangle : 2.6 mm x 4.4 mm).

### (Producing detecting device external cylinder)

The detecting device external cylinder is produced by cutting the cylindrical stainless pipe into a cylinder with outer diameter of 8 mm (inner diameter : 6mm) and length of 25 mm.

### (Producing particulate matter detecting device)

The sensor element is inserted into the penetration portion of the lead terminal cover member from the other end face (side of second penetration portion) so that its one end portion extends by 10.5 mm from one end portion of the lead terminal cover member. The electrical insulating sealant formed by mixing alumina as main component with alcohols solvent as solvent is filled in the gap between the second penetration portion and the sensor element to fix the lead terminal cover member and the sensor element.

In the state where the sensor element is inserted into the penetration portion of the lead terminal cover member, the lead terminal cover member is provided inside the detecting device external cylinder to manufacture the particulate matter detecting device. Table 1 shows the structure of the particulate matter detecting device according to Example 1.

**[Table 1]**

| | | Example 1 | Example 2 | Comparative Example 1 |
|---|---|---|---|---|
| | Shape | Unidirectionally long plate-like | Unidirectionally long plate-like | Unidirectionally long plate-like |
| | Size | Length:30.5mm | Length:30.5mm | Length: 67.6mm |
| Sensor element | | Width: 2.8mm | Width: 2.8mm | Width: 4.25mm |
| | | Thickness: 1.0mm | Thickness: 1.0mm | Thickness: 1.45mm |
| | Measurement electrode | Upper face of sensor element | Upper face of sensor element | Upper face of sensor element |
| | | Material: platinum | Material: platinum | Material: platinum |
| | Heater electrode | Back surface of sensor element | Inside of sensor element | Back surface of sensor element |
| | | Material: platinum | Material: tungsten | Material: platinum |
| Platinum consumption | | 9 mg | 2.3 mg | 114.7 mg |
| particulate matter detecting device | | Length: 56 mm | Length: 56 mm | Length: 80.5mm |
| Method for fixing sensor element | | Lead terminal cover member (sealant filling) | Lead terminal cover member (sealant filling) | Fixation using insulator and talc powder |

### (Example 2)

A sensor element is produced having a pair of measurement electrodes provided on one end portion side on a upper face of a unidirectionally long flat-plate-like element substrate, and a heater electrode buried inside.

In Example 2, likewise Example 1, platinum paste is used for forming the measurement electrodes, wiring and the lead terminal. The heater electrode, wiring and the lead terminal are produced by sufficiently kneading a mixture of the tungsten powder as the conductive paste, 2-ethyl hexanol as the solvent, polyvinyl butyral as the binder, di-2-ethylhexyl phthalate as the plasticizer, sorbitan trioleate as the dispersant, alumina as the same material of green sheet, and glass frit as sintering aid using the stone mill and the triple roll mill (mass ratio is set to tungsten : alumina: glass frit : 2-ethyl hexanol : polyvinyl butyral: di-2-ethylhexyl phthalate : sorbitan trioleate = 80:15:5:50:7:3.5:1).

The particulate matter detecting device is manufactured using the thus obtained sensor element, and the lead terminal cover member and the detecting device external cylinder configured likewise Example 1. The structure of the particulate matter detecting device according to Example 2 is shown in Table 1.

### (Comparative Example 1)

The particulate matter detecting device is produced as Comparative Example using a sensor element 110 as shown in Figs. 6A and 6B. The sensor element has its longitudinal length set to 67.6 mm, width of 4.25 mm, and the thickness of 1.45 mm.

### (Producing sensor element)

The same forming material as the one described in Example 1 is prepared to produce the green sheet. The measurement electrodes, the heater electrode, the lead terminal, and the respective wirings are produced using the same conductive paste as the one as described in Example 1. The measurement electrode has a comb-tooth shape with width of 100 µm and thickness of 10 µm. The heater electrode is set to have the width of 440 µm and thickness of 10 µm. The thickness of the lead terminal is set to 20 µm. The shape and size of the measurement electrode are substantially the same as those of the sensor element of Example 1.

The wiring for connecting the measurement electrode and the lead terminal has the width of 350 µm, thickness of 10 µm and length of 54 mm. The wiring for connecting the heater electrode and the lead terminal has the width of 1550 µm, thickness of 20 µm and length of 50 mm. The width and thickness of each wiring are measurement values of the maximum portion of the wiring.

The prepared green sheets are laminated, and subjected to baking in the same manner as described in Example 1 to produce the sensor element as shown in Figs. 6A and 6B.

The thus obtained sensor element is stored inside the hollow columnar outer sheath body using three insulating insulators and talc powder for fixing the sensor elements. Specifically, a predetermined quantity of the talc powder is filled from the rear of the outer sheath body so as to be pressed for solidification while supporting the sensor element with the insulating insulator (first insulator). Further, another insulating insulator (second insulator) is provided from the rear of the outer sheath body to fill the talc powder again for solidification. Thereafter, the third insulator is provided so that the sensor element is stored while being fixed inside the external casing. Thereafter, the connector plug (connector) is provided at the lead terminal on the other end portion of the sensor element for electrical connecting to produce the particulate matter detecting device.

The consumption of platinum for manufacturing the particulate matter detecting device according to the Comparative Example 1 is 114.7 mg, which is approximately 13 times larger than Example 1, and 50 times larger than Example 2, respectively. Consumption of platinum for wiring portion of the heater electrode occupies approximately 70 % of the platinum consumption to the total usage of platinum. The structure of the particulate matter detecting device according to Comparative Example 1 is shown in Table 1.

### [Industrial feasibility]

The particulate matter detecting device according to the present invention immediately detects generation of failure in DPF, which can be preferably used for identifying abnormality of the device, thus contributing to prevention of the air pollution.

### [Description of codes]

10: sensor element, 11: element substrate, 12: a pair of measurement electrodes, 12a,12b: measurement electrode, 12x: comb-tooth portion, 12y: comb-spine portion, 13: heater electrode, 14a: measurement electrode lead terminal, 14b: measurement electrode wiring, 15a: heater electrode lead terminal, 15b: heater electrode wiring, 16: one end face, 17: the other end face, 20: detecting device external cylinder, 21: external cylinder body, 23: open frontal area, 26: one end face, 27: the other end face, 28: rear external cylinder, 29: screw nut, 30: lead terminal cover member, 31: penetration portion, 31a: first penetration portion, 31b: second penetration portion, 32: sealant, 33: lead wiring, 34: inorganic powder, 36: one end face, 37: the other end face, 41: metallic washer, 42: wiring, 43: wiring protective material, 51: insulator, 52: inorganic powder, 100: particulate matter detecting device, 110: sensor element, 111: element substrate, 112: pair of measurement electrodes, 113: heater electrode, 114, 115: wiring, 116,117: lead terminal

## Claims

1. A particulate matter detecting device comprising:
a sensor element having a unidirectionally long flat-plate-shaped element substrate, at least one pair of measurement electrodes arranged on one end portion side of said element substrate, a heater electrode arranged on said one end portion of said element substrate, a measurement electrode lead terminal arranged on the other end portion of said element substrate, a heater electrode lead terminal arranged on said the other end portion of said element substrate, a measurement electrode wiring for electrically connecting said measurement electrodes and said measurement electrode lead terminal, and a heater electrode wiring for electrically connecting said heater electrode and said heater electrode lead terminal;
a hollow columnar lead terminal cover member which is formed of ceramics with electrical insulation property, and in which a penetration portion that penetrates from one end face to the other end face is formed and said sensor element is inserted into said penetration portion so that said measurement electrode lead terminal and said heater electrode lead terminal of said sensor element are at least partially arranged inside said penetration portion; and
a detecting device external cylinder that is formed of a metal material for storing said lead terminal cover member having said sensor element inserted into said penetration portion in a state that said one end portion of said sensor element is exposed outside from one end face of the external cylinder, wherein:
said penetration portion formed in said lead terminal cover member includes a first penetration portion in which a size of a cross section perpendicular to a penetration direction corresponding to a size of a cross section of said sensor element perpendicular to a longitudinal direction in a range with a predetermined length from said one end face of said lead terminal cover member, and a second penetration portion which penetrates from said first penetration portion to said the other end face of said lead terminal cover member and which is formed so that a size of a cross section perpendicular to the penetrating direction is larger than that of said first penetration portion; and
an electrical insulating sealant is filled in a gap between said second penetration portion and said sensor element inserted into said second penetration portion so that said sensor element and said lead terminal cover member are fixed.

2. The particulate matter detecting device according to claim 1, wherein a lead wiring for electrically connecting said measurement electrode lead terminal and said heater electrode lead terminal is provided in a gap between said second penetration portion and said sensor element inserted into said second penetration portion.

3. The particulate matter detecting device according to claim 2, wherein said measurement electrode lead terminal and said heater electrode lead terminal are joined to respective said lead wirings by welding.

4. The particulate matter detecting device according to claims 2 or 3, wherein said measurement electrode lead terminal and said heater electrode lead terminal, and respective said lead wirings are fixed by said sealant.

5. The particulate matter according to any one of claims 1 to 4, wherein said measurement electrode wiring and said heater electrode wiring are partially provided inside said second penetration portion of said lead terminal cover member so as to be coated with said sealant.

6. The particulate matter detecting device according to any one of claims 1 to 5, wherein said sealant is at least one selected from a group consisting of an inorganic adhesive, a glass material, and a heat-resistant resin.

7. The particulate matter detecting device according to any one of claims 1 to 6, wherein a length of said second penetration portion formed in said lead terminal cover member in a penetration direction is 0.05 to 0.5 times longer than that of the sensor element.

8. The particulate matter detecting device according to any one of claims 1 to 7, further comprising a cylindrical rear external cylinder with a fitting portion that is allowed to be fitted with the other end portion side of said detecting device external cylinder, wherein the other end portion of said detecting device external cylinder is fitted with said fitting portion of said rear external cylinder so that said lead terminal cover member is stored inside said detecting device external cylinder while being pressed against said one end portion side of said detecting device external cylinder.

9. The particulate matter detecting device according to any one of claims 1 to 8, further comprising a rear external cylinder allowed to be fitted with the other end portion of said detecting device external cylinder, wherein said rear external cylinder is fitted with the other end portion side of said detecting device external cylinder so that a fitted portion between said detecting device external cylinder and said rear external cylinder is joined by welding.

10. The particulate matter detecting device according to any one of claims 1 to 9, wherein:
an electrical insulating insulator is further provided inside said detecting device external cylinder at said one end portion side of said detecting device external cylinder, and an electrical insulating inorganic powder is filled between said insulator and said lead terminal cover member; and
said one end portion of said sensor element that has penetrated through said penetration portion of said lead terminal cover member penetrates through said inorganic powder and said insulator that have been filled, and is exposed from said one end face of said detecting device external cylinder.

11. The particulate matter detecting device according to any one of claims 1 to 10, wherein an electrical insulating inorganic powder is filled in a gap between said second penetration portion and said sensor element inserted into said second penetration portion on said one end portion side of said lead terminal cover member, and said sealant is filled on said the other end portion side of said lead terminal cover member.
